# EUROPEAN PATENT APPLICATION

(11) **EP 3 150 057 A1**
(43) Date of publication of application: **05.04.2017**
(21) Application number: 15425077.3
(22) Date of filing: 01.10.2015
(51) Int. Cl.: A01D 89/00, A01D 57/20, A01D 84/00

(54) **APPARATUS FOR THE MOVEMENT AND TRANSPORT OF AGRICULTURAL PRODUCTS**

(71) Applicant: I.G. S.R.L., 48026 Russi (RA) (IT)
(72) Inventor: Ravaglia, Paolo, 48012 Bagnacavallo RA (IT)
(74) Representative: Modiano, Micaela Nadia

(57) **Abstract**

Apparatus for the movement and transport of agricultural products, comprising a chassis (2) which is associated with elements (3) for lifting and placing agricultural products on a useful surface of at least one conveyor belt (4) which in turn faces and is proximate to the elements (3), to move and transport the agricultural products according to a working direction (B), defined by the belt (4). The apparatus comprises at least one elongated body (10), coupled directly or indirectly to the chassis (2) and rotating about a longitudinal axis (C) thereof; in at least one configuration for work, the body (10) is arranged at least proximate to the useful surface of the belt (4) and is directed, with successive portions of its rotating lateral surface (10a), toward the elements (3), in order to intercept and redirect any agricultural products lifted by the corresponding elements (3) which face the body (10).

## Description

The present invention relates to an apparatus for the movement and transport of agricultural products.

As is known, in agriculture the need regularly arises to cut or mow grass or other plants, which are subsequently collected in order to send them for various treatments and uses.

For example, in the zootechnical sector grass, wheat, maize and hay are commonly used as forage, for feeding animals.

According to methods that are now consolidated, the collection therefore involves first of all the cutting of the agricultural products, which is done by mowing machines or the like, which cover the entire extent of the ground of interest and leave the above mentioned agricultural products, after cutting, distributed randomly and indiscriminately on the ground.

After the mowers, and in order to facilitate the subsequent collection operations, adapted machines are then deployed which amass the agricultural products along ordered rows up to two meters wide (called "windrows").

Thus, round balers or the like can move along the ground and follow the ideal path traced by the windrows, in order to collect all the agricultural products in a relatively short time and form bales.

Some, more traditional machines for forming windrows are provided with teeth that rotate and brush against the ground, in order to move the cut grass transversely to the advancement direction, collecting it and piling it thus along ordered rows, called windrows.

Recently, in order to prevent the unwanted sliding to the ground of the grass (or other agricultural product), implementation solutions have likewise become widespread in which the formation of the windrows is entrusted to gathering machines, also known as "belt windrowers", which are towed or independently motorized for covering the ground of interest.

Such windrowers are first of all provided with a plurality of teeth which rotate about a horizontal shaft, which is kept proximate to the ground and perpendicular to the advancement direction.

The teeth can thus lift the cut grass (or other cut agricultural product) and place it immediately behind them, where one or two conveyor belts are arranged, parallel to the shaft and mutually aligned.

The belts can have the same direction of travel or opposite directions of travel, but in any case their motion makes it possible to deposit the cut agricultural products at one or both sides, where the windrows are thus formed while advancing along the ground.

When the agricultural product is distributed on the ground in great quantities (and especially if it is long-stem), before the windrowers the ground is covered by a further type of machine, called a "tedder".

Such machine is provided with vertical-axis rotors that are designed to come into contact with the product, distributing it on the ground in a more homogeneous and aerated manner, thus speeding up its drying and more generally increasing its quality.

Such implementation solution is not however devoid of drawbacks.

Tedders in fact cause the formation of tangles on the ground, which result in unwanted problems for the windrowers subsequently deployed to form windrows.

The tangles are generated by the yielding teeth with which the tedders are provided, and in their rototranslating motion they leave the blades of grass (or other agricultural product) interwoven or in any case connected.

When the windrower tries to lift such tangles, during its advancement along the piece of agricultural land, the blades of grass do not detach from the contiguous blades, but are instead retained by them because they are concatenated. Obviously, when the teeth encounter such tangles, the first blade lifted entrains the contiguous blades, but when this occurs at the end portion of the belt, at the opposite end with respect to the unloading area, it causes a situation that is entirely unwanted.

In fact, the speed of lifting is such that the lifted product does not detach from the contiguous blades before reaching the other side of the belt, where the lateral containment side wall which usually runs alongside the belt on the opposite side from the pick-up drums ends.

Thus, the agricultural product tends to fall at the opposite end while at the same time it is subjected to the entrainment action of the belt: the stalling that results from this keeps it substantially immobile while further product is lifted, resulting in the formation of buildups of material, which may be large, at the end of the containment side wall.

This phenomenon quickly causes the belt to become engulfed, or results in the formation of an irregular windrow, in that the windrow will contain unwanted piles constituted by the masses of product that the belt suddenly succeeds in entraining, to then unload them on to the ground at the unloading end.

The operator is thus forced to stop the machine and intervene manually, with evident inconvenience and loss of time (and productivity).

Likewise, the conventional contrivances have now been found to be unsatisfactory, since they are entirely inconvenient and impractical because they require adapted additional apparatuses to be mounted on the belt, which however must often be removed if it is desired to invert the direction of translation of the belt, for example in order to pass from the configuration adapted to form central windrows (in which piles are frequently formed) to the configuration adapted to form lateral windrows (in which piles are usually not formed).

The aim of the present invention is to solve the above mentioned problems, by providing an apparatus that is capable of forming windrows in a practical and effective manner, while guarding against or at least reducing the risk of engulfing or of unwanted piles of agricultural product on the ground.

Within this aim, an object of the invention is to provide a versatile apparatus that ensures an optimal operation, without operations to mount or dismantle additional components, if it is desired to invert the direction of translation of the conveyor belts.

Another object of the invention is to provide an apparatus that is structurally simple, is low cost and ensures a high reliability of operation.

Another object of the invention is to provide an apparatus that is safe in use and which can be easily implemented using elements and materials that are readily available on the market.

This aim and these and other objects which will become better apparent hereinafter are achieved by an apparatus for the movement and transport of agricultural products, of the type of grass, hay, forage, grain, maize, and the like, cut and distributed on the ground, which comprises a chassis which can be coupled to a drive unit, for the movement thereof according to an advancement direction, said chassis being associated with elements for lifting and placing agricultural products on a useful surface of at least one conveyor belt, facing and proximate to said elements, for the movement and transport of the agricultural products according to a working direction defined by said belt, characterized in that it comprises at least one elongated body, coupled directly or indirectly to said chassis and rotating about a longitudinal axis thereof, in at least one configuration for work said at least one body being arranged at least proximate to said useful surface of said belt and being directed, with successive portions of its rotating lateral surface, toward said elements, in order to intercept and redirect any agricultural products lifted by the corresponding said elements which face said body.

Further characteristics and advantages of the invention will become better apparent from the description of a preferred, but not exclusive, embodiment of the apparatus according to the invention, which is illustrated by way of non-limiting example in the accompanying drawings wherein:
Figure 1 is a perspective view, from the front with respect to the advancement direction, of a movement apparatus according to the invention, with the elongated body in the configuration for work and in a first possible embodiment;
Figure 2 shows the movement apparatus in Figure 1, with a different arrangement of the elongated body;
Figures 3 and 4 are rear perspective views of the elongated body of Figure 1, respectively in the configurations in Figures 1 and 2;
Figure 5 is a perspective view, from the front with respect to the advancement direction, of the elongated body in a second possible embodiment;
Figures 6 and 7 are rear perspective views of the elongated body of Figure 5, showing the coupling to the rest of the apparatus according to the invention, in two possible operating positions.

With reference to the figures, the reference numeral 1 generally designates an apparatus for the movement and transport of agricultural products, of the type of grass, hay, forage, grain, maize, and the like, (previously) cut and distributed on the ground (usually on a piece of agricultural land).

More precisely, in the preferred application the apparatus 1 is intended to move and transport previously-cut agricultural products (for example grass), piling them along ordered rows (known as "windrows") according to the methods which will be explained hereinafter.

The ordered distribution thus obtained in fact enables a quicker and easier pickup of the grass (or other agricultural product), by other agricultural machines, according to specific requirements and to the treatments that it will undergo.

In this regard, it should be noted for example that round balers or similar machines can be deployed on the piece of agricultural land, such machines being adapted to gather the grass and subsequently make bales or silage, for consequent use in zootechnical circles, such as feed for animals.

It should be noted however that the possibility is not ruled out of also using the apparatus 1 for different purposes and/or types of agricultural products, according to the specific requirements, while remaining within the scope of protection claimed herein.

It should further be noted that before the apparatus 1 is deployed, the ground can be covered by tedders or similar machines, which increase the quality of the agricultural product, by distributing it on the ground in a homogeneous and aerated manner, thus accelerating the drying thereof.

The innovative peculiarities of the apparatus 1, as will be seen hereinafter, are what make it possible to ensure the optimal formation of windrows (and therefore of bales or the like), even if the tedder forms tangles or "cobwebs" along the ground, made up of interwoven blades of grass or other previously-cut agricultural products.

The apparatus 1 comprises therefore a chassis 2 which can be coupled to a drive unit, according to conventional methods, in order to be capable of being moved according to an advancement direction A, along a piece of agricultural land of interest, on which the agricultural products with which to form the windrows are distributed randomly and indiscriminately.

It should be noted that typically the chassis 2 (as with the apparatus 1 in general) is entrained along the ground by a tractor or a similar vehicle, which is provided with the above-mentioned drive unit and coupled to the chassis 2. The possibility is not ruled out however of mounting the drive unit onboard the apparatus 1 proper (conveniently modified), so as to motorize it independently.

In turn, the chassis 2 is associated with elements 3 for lifting and placing agricultural products to at least one useful surface of a conveyor belt 4, which faces and is proximate to the elements 3.

In more detail, the lifting and placing elements 3 preferably comprise at least one row of mutually aligned teeth 5 which rotate about a working shaft 6.

Again with reference to the embodiment shown in the enclosed solutions, preferably the apparatus 1 has a plurality of (mutually parallel) rows of teeth 5, which can move in respective gaps defined between a plurality of spacers 7 (either plates, or straps).

According to substantially conventional methods, while the apparatus 1 advances along the ground, the teeth 5 lift the agricultural products and place them immediately behind them, onto the belt 4, which moves and transports them according to a working direction B, which is defined thereby and is substantially transverse to the advancement direction A.

In order to facilitate the correct movement of the agricultural products by the belt 4, the apparatus 1 also comprises a containment barrier 8 (for example of the type of a housing or of a sheet of polymeric material) for the agricultural products, which is arranged along one side of the belt 4, at the opposite side with respect to the lifting and placing elements 3.

The chassis 2 can be designed to constantly maintain the belt 4 proximate to the ground (in the relative position in which it is shown in the accompanying figures) or it can in turn comprise movable supporting units 9, which support the belt 4 and at the same time are capable of bringing it to different relative positions (relative with respect to the ground), for example to lift it and rotate it, thus reducing its space occupation in view of the transfer by road of the apparatus 1.

It should be noted likewise that first of all there is the possibility that the conveyor belt 4 moves around a preset closed path (which corresponds to the working direction B) in a single direction. Likewise, it is intended to provide apparatuses 1 in which the same belt 4 can operate indifferently in both directions of movement (in an operating mode that, moreover, further enhances the peculiarity of the invention, as will be seen hereinafter). Such operating mode is shown in the accompanying figures, where the working direction B is shown with designation of the two directions in which, according to the specific requirements, the belt 4, or each belt 4, can move. In fact it should be noted that although the accompanying figures show an apparatus 1 provided with a single belt 4, the possibility is not ruled out of making and marketing apparatuses 1 that are provided with two (or more) belts 4, mutually aligned along the working direction B and arranged facing and proximate to respective elements 3.

Therefore as it moves along the piece of agricultural land, in the advancement direction A, the apparatus 1 collects the agricultural products distributed thereon by way of the elements 3, in order to then re-deposit them along one side, by way of the movement of the belt 4, thus forming the windrow progressively.

The possibility of moving the belt 4 in both directions, and of providing the apparatus 1 with one or two belts 4, thus makes it possible to form one central windrow or one or two lateral windrows.

According to the invention, the apparatus 1 comprises at least one elongated body 10, which is coupled directly or indirectly to the chassis 2 and rotates about a longitudinal axis C thereof.

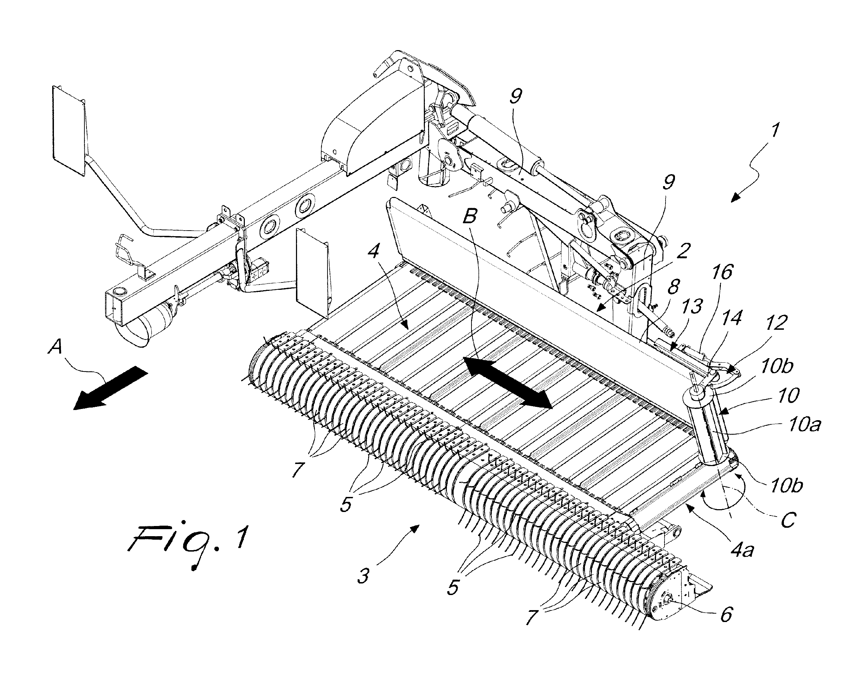

In at least a configuration for work (Figure 1), the body 10 is arranged at least proximate to the useful surface of the belt 4 and is directed, with successive portions of its rotating lateral surface 10a, toward the elements 3.

Thanks to such peculiar implementation choice, the body 10 (its rotating lateral surface 10a) intercepts and redirects any agricultural products possibly lifted by the corresponding elements 3 which face the body 10 (i.e. lifted by the teeth 5 that directly face the body 10 proper).

From this point onward it should be noted that the elongated body 10 can be arranged (in the configuration for work) proximate to any point of the belt 4, obviously while remaining within the scope of protection claimed herein.

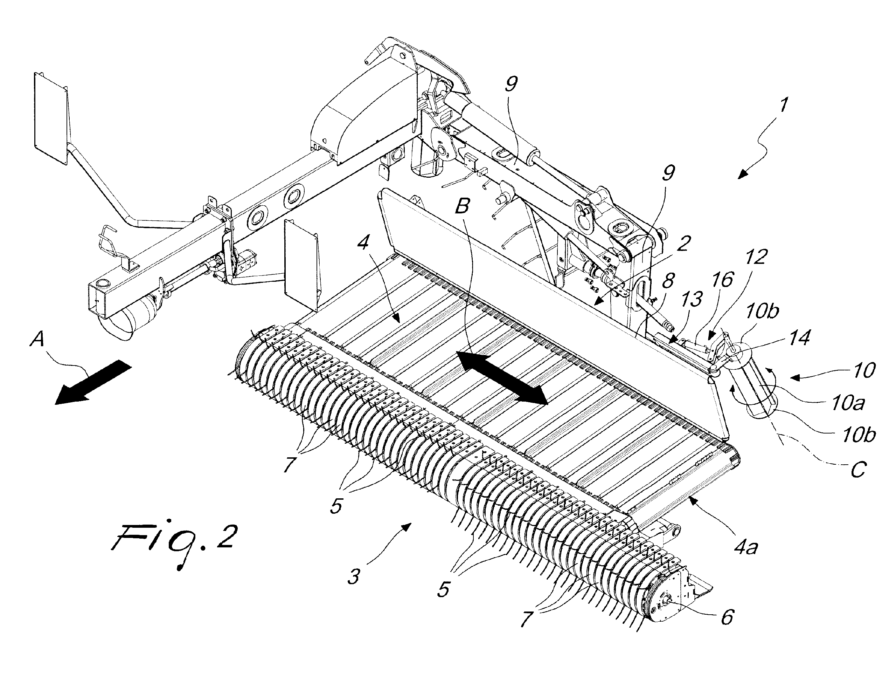

This notwithstanding, in the preferred application, which is also shown in Figures 1 and 2 for the purposes of non-limiting example, the elongated body 10 is arranged at least proximate to an end part 4a of the belt 4, where the risk is higher of the formation of large masses of grass or other agricultural products, which the belt 4 is not able to move properly.

However, it should be noted that preferably (but not exclusively) the end part 4a proximate to which the body 10 is arranged (at least in the configuration for work) is the part that, in the typical working condition, is arranged at the opposite end with respect to the area for unloading the agricultural products (which in turn obviously depends on the direction of movement chosen for the belt 4).

Typically in fact, it is in precisely this area (where moreover the barrier 8 ends) that any tangles of agricultural products lifted will accumulate on the belt 4 without being moved: the rotating lateral surface 10a of the body 10 prevents the formation of buildups of agricultural products proximate to the end part 4a, in that it intercepts and redirects them, thus achieving the set aim, in an entirely simple and practical manner.

It should be noted that in the configuration for work the longitudinal axis C of the elongated body 10 can be substantially perpendicular to the useful surface of the belt 4 or even inclined, so as to define a calculatedly suitable angle with respect to the perpendicular to the belt 4, and in any case such as to allow the lateral surface 10a to intercept and redirect the agricultural products. For example therefore, the inclination with respect to the perpendicular can be equal to 10°, 20° or 30°.

Conveniently, it is intended both to provide apparatuses 1 according to the invention which are provided with a single elongated body 10 (either the one arranged at the end part 4a or proximate to another point of the belt 4), and to produce and market apparatuses 1 according to the invention which comprise a plurality of elongated bodies 10, which rotate about the respective longitudinal axis C. In such solution, and in the configuration for work, obviously each elongated body 10 will be arranged at least proximate to the useful surface of the belt 4 and will be directed, with successive portions of the respective rotating lateral surface 10a, toward the elements 3.

In a possible embodiment, the elongated body 10 is intended to rotate about its own longitudinal axis C in a single direction (clockwise or anticlockwise). With reference therefore to the typical working condition illustrated above, the direction of rotation of the body 10 will be chosen so as to redirect the agricultural products toward the belt 4 so as to enable their transport toward the preset unloading area, where they will join the others, for the formation of the windrow.

As also illustrated in the accompanying Figures 1 and 2, conveniently it is intended that at least in the configuration for work the elongated body 10 will be able to rotate about the longitudinal axis C in both directions of rotation. In such embodiment, each direction of rotation is preferably associated with a respective direction of movement and transport of the agricultural products, imparted by the belt 4 along the working direction B.

Thus, the apparatus 1 can operate even more efficiently: when the belt 4 transports the agricultural products to the opposite end with respect to the body 10, the direction of rotation chosen is such as to redirect the agricultural products toward the belt 4 and therefore the corresponding unloading area, as has been seen. If it is desired to change the direction of movement (translation) of the agricultural products, by inverting the motion of the belt 4, it is possible to adopt the opposite direction of rotation for the body 10, which thus does not oppose the transport of the agricultural products and, conversely, improves the unloading onto the ground.

The ability of the body 10 to rotate in both directions therefore makes it possible to use the latter, in an entirely practical manner, in any operating condition of the belt 4 (for any direction of movement of the agricultural products), and therefore both for moving lateral windrows and for central windrows, thus ensuring great versatility for the apparatus 1.

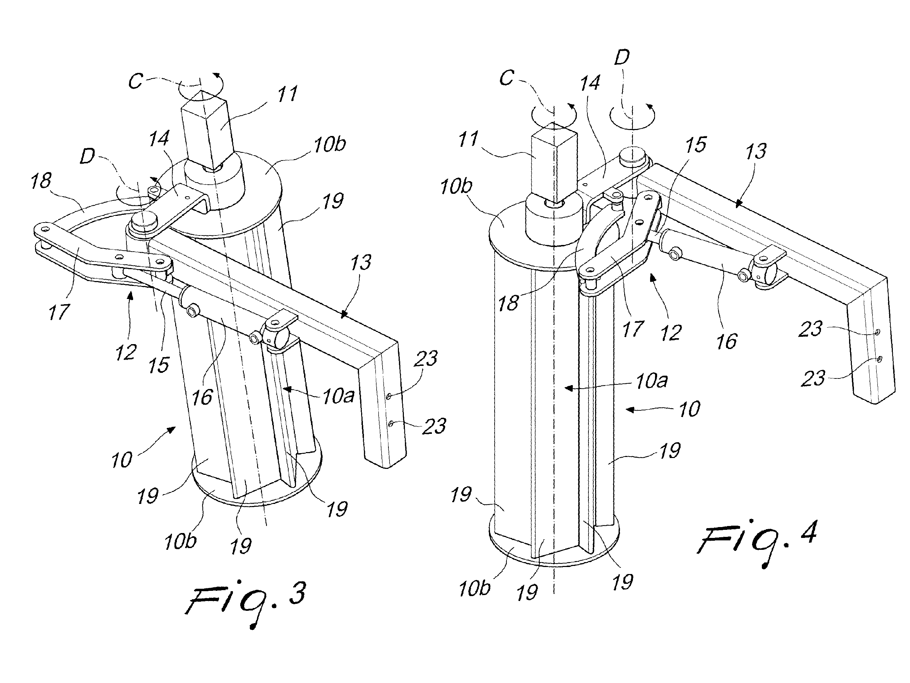

The rotation of the elongated body 10 about its own longitudinal axis C is entrusted to a respective engine assembly, which can be chosen of any type, while remaining within the scope of protection claimed herein, and which for example can be an electric motor 11 (Figures 3 and 4).

The possibility is not ruled out however of obtaining the rotation of the body 10 by way of contact (mediated for example with an elastomer) between the belt 4 and the lower face of the body 10. The body 10 can in fact also effectively carry out its primary function by placing it not only proximate to, but directly in contact with the useful surface of the belt 4.

In an embodiment of great practical interest, which is also proposed in the accompanying figures by way of non-limiting example, the body 10 is coupled, directly or indirectly, to the chassis 2 by way of a supporting structure 12 which can move.

The supporting structure 12 thus enables the transition of the body 10 from a configuration of rest (Figure 2) to the configuration for work (Figure 1), and vice versa. In the configuration of rest the body 10 is spaced apart from the useful surface of the belt 4 (and for example from the end part 4a), so as to not interfere with any agricultural products lifted by the elements 3 which face the body 10, in order to allow the free transit thereof.

Such choice is of undoubted interest and further increases the versatility of the invention, ensuring an optimal operation of the invention in every working condition.

In fact, if from the typical working condition, in which the agricultural products are unloaded at the opposite end with respect to the end part 4a and to the body 10, it is decided to invert the motion of the belt 4, in order to form the windrow at the opposite end of the latter, the body 10 can be brought from the configuration for work to the configuration of rest, thus preventing the body 10 from hindering the transit and unloading of the agricultural products

It should be noted that such peculiar embodiment can allow the adoption of bodies 10 rotating in a single direction of rotation about their own longitudinal axis C (since the body 10 can be brought to the configuration of rest, spaced apart from the belt 4, it is not necessary to invert the direction of rotation when inverting the motion of the belt 4).

This notwithstanding, the possibility is not excluded of providing apparatuses 1 according to the invention in which the body 10, still supported by the movable supporting structure 12, can rotate in both directions, in order to increase the versatility and the options available to the user.

In particular, in the preferred but non-limiting embodiment of the application of the invention, the supporting structure 12 comprises a bracket 13 associated with the chassis 2. Furthermore, the bracket 13 is coupled rotatably to a supporting arm 14 of the body 10. More precisely, the arm 14 is made to rotate, about a rotation axis D which is preferably (but not exclusively) parallel to the longitudinal axis C of the body 10, by a respective actuator.

Thanks to such implementation choice, it is possible to obtain the transition from the configuration of rest to the configuration for work, and vice versa.

Even more specifically, the actuator (which can in any case be chosen of a different type, according to the specific requirements) is constituted substantially by a hydraulic piston 15: the piston 15 can slide in a respective cylinder 16 coupled to the bracket 13 and, at the opposite end, the piston 15 is pivoted to a lever 17.

In turn, the lever 17 is rotatably coupled to the bracket 13 and, at the opposite end, to a conveniently contoured member 18, which is pivoted to the body 10.

As can be seen from a comparison of Figures 1 and 2 (or 3 and 4), by sliding in the cylinder 16 the piston 15 imparts a movement (rotation) to the lever 17, which in turn imparts the movement to the member 18 and therefore, at the end of the kinematic chain thus formed, to the body 10, enabling the transition thereof from the configuration for work (Figures 1 and 3), which corresponds to the maximum extraction of the piston 15 with respect to the cylinder 16, to the configuration of rest (Figures 2 and 4), in which the piston 15 is retracted almost completely into the cylinder 16, and vice versa.

The possibility is not ruled out moreover of having further stable (intermediate) positions for the piston 15, corresponding to further operating configurations of interest for the body 10, where necessitated by the specific requirements.

It should be noted that the lateral surface 10a of the body 10 (usually, but not exclusively, interposed between mutually opposite end faces 10b) can have various shapes, in conformance with practical requirements.

For example, the lateral surface 10a can be cylindrical or prismatic; preferably however, and as can be seen from the accompanying figures, the lateral surface 10a of the body 10 is constituted by a plurality of vanes 19 which are mutually connected along the flanks and distributed in series, according to various inclinations, about the longitudinal axis C.

In the configuration for work, therefore, the body 10 will oppose the agricultural products lifted by the nearest teeth 5 with the vane 19 (or vanes 19) which, instant by instant, is (are) directed toward those teeth 5, in order to intercept and redirect the grass and prevent the formation of buildups and tangles.

In embodiments that involve cylindrical or prismatic lateral surfaces 10a, it will instead be respective longitudinal portions thereof, in succession directed toward the teeth 5 during the rotation of the body 10, that will redirect the agricultural products.

In an embodiment of significant practical interest, illustrated in Figures from 5 to 7 for the purposes of non-limiting example of application of the invention, the body 10 is provided with an additional degree of freedom, with respect to the chassis 2 (in addition therefore to the already-mentioned ability to rotate about its own longitudinal axis C and the rotation axis D).

In fact, at least in the configuration for work, the elongated body 10 can oscillate about a transverse axis E, which is preferably parallel to the useful surface of the belt 4.

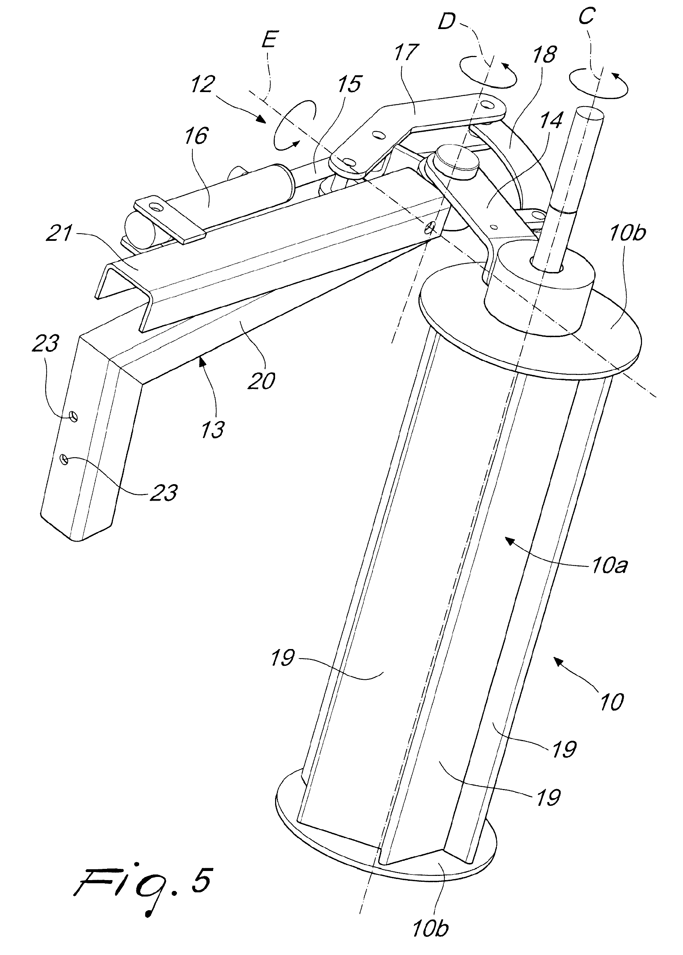

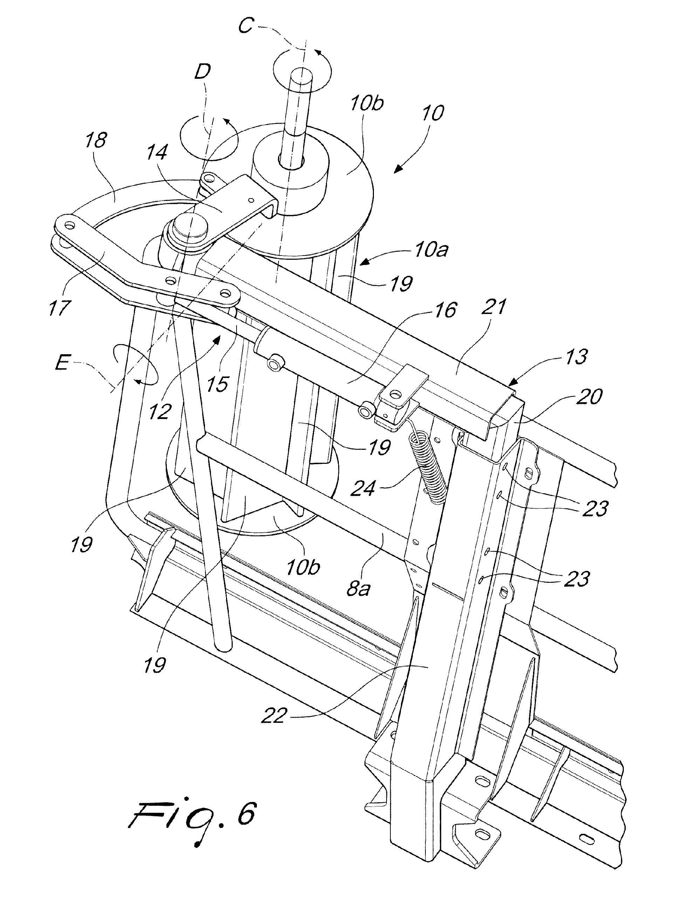

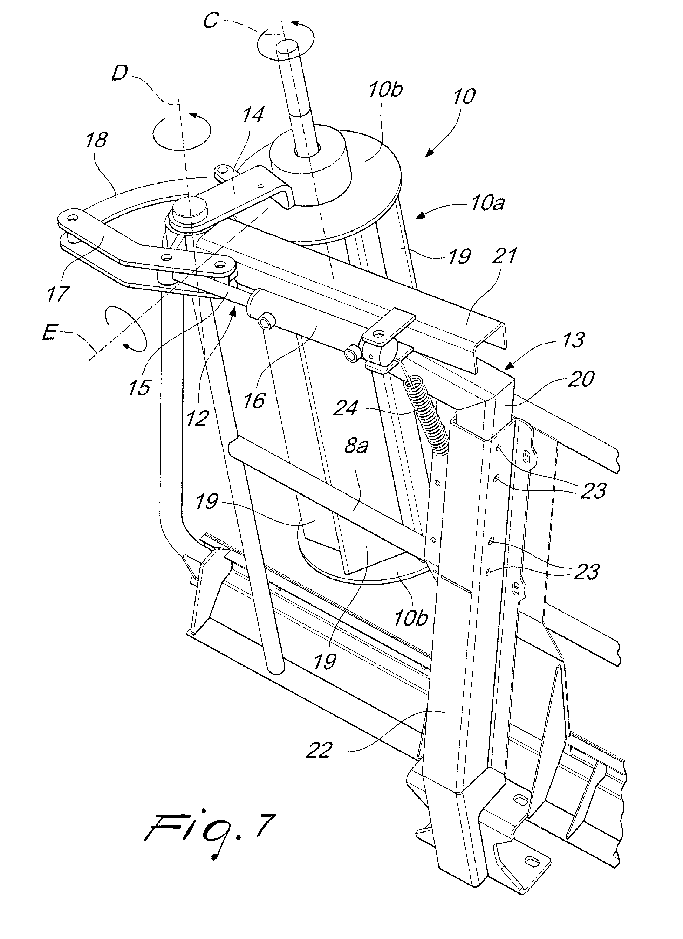

This allows the body 10 to pass from a standard active position (Figure 6), which incidentally is the only position that the body in Figures from 1 to 4 can assume in the configuration for work, to an auxiliary position (Figures 5 and 7), and vice versa.

Under particular conditions (as will be better described hereinafter), the oscillation from the active position to the auxiliary position, and in particular the consequent shift of the lower flap of the elongated body 10, allows any large piles of agricultural products to pass below the elongated body 10.

The utility of the oscillation ability is evident if we note that sometimes, during normal operation, grass or other agricultural products build up against the lower base 10a (or in any case against the lower flap of the body 10), at the opposite end with respect to the unloading area defined by the direction of movement of the belt 4. Such masses of material can in turn form unwanted buildups, in that the body 10, with its lateral surface 10a, is not capable of redirecting them and transporting them as desired.

The oscillation ability enables to the body 10 to incline and/or lift temporarily, so as to temporarily widen the space between the belt 4 and the lower base 10b, thus allowing the passage of the above-mentioned buildups of material.

More specifically, in the embodiment proposed in Figures from 5 to 7 by way of non-limiting example, the oscillation ability is obtained by way of the choice to provide multi-part brackets 13 (instead of single-piece brackets, as in Figures from 1 to 4) which comprise at least one first supporting unit 20, which can be rigidly anchored to the chassis 2, and a profiled element 21.

The profiled element 21 is articulated to the first supporting unit 20 about the transverse axis E and supports directly the elongated body 10, so as to give the latter the desired oscillation ability.

It should be noted that, in Figures 6 and 7, for the purpose of better highlighting the above-mentioned components the barrier 8 has been removed, therefore showing the skeleton 8a intended to support it (and also, as desired, the body 10 behind).

In order to contain encumbrances, it should be noted that the profiled element 21 can have a transverse cross-section complementary to that of the supporting unit 20, so as to substantially be superimposed on the latter (in the active position).

It should likewise be noted that in order to further increase the versatility of the apparatus 1 according to the invention, in the embodiment described in the above paragraphs the first supporting unit 20 is not rigidly anchored to the chassis 2 (as it is in other embodiments while remaining within the scope of protection claimed herein), but can slide vertically in a shell 22 of matching shape.

It is thus possible to fix the bracket 13 to the shell 22 (and to the chassis 2) at a plurality of different vertical heights, corresponding to different heights for the elongated body 10, with respect to the belt 4.

Once the desired height has been found, the first supporting unit 20 can in fact be rigidly anchored to the shell 22 by making use of respective rows of holes 23, in which to insert screws or similar fixing means.

As can be seen from Figures 3 and 4, holes 23 are also provided in the body 10 shown in those figures, in order to allow a height adjustment thereof as well.

Conveniently, and with further reference to Figures 6 and 7, the elongated body 10 is coupled, directly or indirectly, to the chassis 2 by way of a respective elastic element 24 (a spring for example).

The elastic element 24 thus develops an elastic reaction which firstly opposes the oscillation of the body 10 from the standard active position to the auxiliary position, thus contributing to keep it in the normal working situation (Figure 6).

When any piles of material that have formed against the body 10, at the opposite end with respect to the unloading area, become large, their pressure (by way of the action of the underlying belt 4 which entrains them) becomes such that it defeats the elastic reaction of the spring and determines the oscillation of the body 10 toward the auxiliary position.

Thus, the large piles of agricultural products can bypass the body 10 (passing below it) and after their transit the elastic reaction of the elastic element 24 automatically returns the body 10 to the active position, thus restoring the standard active condition.

In a practical and easy manner, therefore, the oscillation occurs automatically only when the unwanted pile of material becomes large enough to defeat, with its pressure against the body 10, the elastic reaction (obviously preset) of the elastic element 24, which presses against the body 10.

In the embodiment proposed merely for the purposes of explanation, the belt 4 is wrapped in a ring about a pair of supporting shafts (therefore along the above mentioned closed path), which are mutually parallel and at right angles to the working direction B. In such embodiment therefore, at least one of the supporting shafts, meshing with the belt 4 (thanks to for example a pulley with which it is provided), is made to rotate about its own main axis by a respective main motor and this produces the movement of the belt 4.

It should be noted that the above mentioned useful surface of the belt 4, along which the agricultural products lifted and placed by the elements 3 are deposited, corresponds substantially to the entire straight upper segment (interposed between the supporting shafts) of the belt 4 wrapped in a ring.

Although it is possible that the piston 15 can be moved independently, preferably it is connected, directly or indirectly, to the main motor.

It should be noted that according to such, preferred, embodiment, the apparatus 1 achieves the further objective of maintaining a structure that is simple overall, and low cost, in that the movement of the body 10 (between the configuration for work and the configuration of rest) is entrusted to components that are for the most part present, in order to ensure the movement of the belt 4 along its closed path, without the need therefore for further specific contrivances.

In order to obtain the connection, direct or indirect, between the piston 15 and the assembly for actuating the conveyor belt 4, in the preferred embodiment the cylinder 16 (of the hydraulic type, double-acting) is arranged in parallel to the main motor, chosen to be of the type of a hydraulic motor. Thus, the transition of the piston 15 from the configuration of rest to the configuration for work, and vice versa, corresponds to the inversion of the flow of the operating fluid of the hydraulic motor.

In more detail, when the belt 4 moves the agricultural product toward the opposite end from the portion 4a, the input pressure of the hydraulic motor acts on the bottom of the cylinder 16 in order to keep the body 10 in the configuration for work. The configuration of rest is automatically obtained when the direction of movement of the belt 4 is inverted, as such event corresponds to the inversion of the oil delivery to the main motor, which automatically pushes the piston 15 from the opposite end, thus obtaining the movement of the body 10 and its transition to the configuration of rest.

Operation of the apparatus according to the invention is the following.

As has already been seen, the apparatus 1 can be towed by a respective drive unit along a piece of agricultural land, on which previously-cut (by a mowing machine for example) agricultural products (grass or the like) are distributed randomly and indiscriminately.

As it advances progressively along the ground, the apparatus 1 takes the agricultural products from the ground (by way of the teeth 5) and places them on each belt 4, which deposits them on one side (as a function of the direction of movement of the belt 4 proper), thus forming the windrow.

The presence of the body 10 makes it possible to overcome the drawbacks often caused, in conventional devices, by tangles of interwoven blades of grass, which can be dispersed to the ground and which, when they are lifted, can form buildups of material, which in turn are the cause of engulfing and other problems.

In fact, in conventional apparatuses, in the event of tangles, the blades of grass lifted are not entrained correctly by conventional belts, but are blocked by the walls arranged at their sides and/or are retrained by other blades of grass.

Conversely, in the apparatus 1 according to the invention the agricultural products which are lifted proximate to the end part 4a (or which in any case are lifted by the teeth 5 facing the body 10) are intercepted and (effectively "rebounding" against the lateral surface 10a which rotates about the longitudinal axis C) are redirected by the body 10 (which is arranged in the configuration for work).

Thus, the danger is ruled out, or at least reduced, of the formation of buildups of agricultural products in the area adjacent to the end part 4a, thus guarding against or at least reducing the risk of engulfing or of unwanted piles of agricultural product on the ground.

The apparatus 1 is therefore capable of making windrows correctly, with an operation that is simple, practical and effective.

As has been seen, the movement of the body 10 in both directions of rotation, as with the ability to bring the body 10 to the configuration of rest, ensure great versatility for the apparatus 1. In fact, the latter operates optimally even when it is desired to invert the direction of movement of the belt 4 (and therefore it is desired to form windrows proximate to the end part 4a).

When such need arises, it is in fact sufficient to invert the direction of rotation of the body 10 and/or bring it to the configuration of rest: in the first case, the body 10 pushes the agricultural products toward the area of formation of the windrow anyway, while in the second case (in which the body 10 is spaced apart), it does not impede the transit of the material. Such important functionality is moreover obtained without having to carry out operations to mount or dismantle additional components. In addition, by conveniently connecting the cylinder 16 to the hydraulic motor responsible for the movement of the belt 4, the transition to the configuration of rest is obtained automatically upon inverting the sliding of the belt 4. The inversion of the direction of rotation of the body 10 about the longitudinal axis C can also be obtained automatically, at the moment of inverting the sliding of the belt 4.

It should further be noted that the transition of the body 10 from the configuration for work to the configuration of rest (and vice versa) can (preferably, but not exclusively) occur at low speed (in that the requirements that cause the transition do not require particular rapidity) and this also ensures observance of safety requirements.

In the embodiment in Figures 5, 6 and 7, the practicality of the invention is further increased by the ability of the body 10 to oscillate about the transverse axis, which makes it possible to automatically overcome the formation of any buildups of materials against the body 10, proximate to its lower base 10b.

Such results therefore show that optimal operation is obtained with an apparatus 1 that is reliable, structurally simple and low cost (in that it is not necessary to have adapted independent contrivances, for moving the body 10).

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be substituted with other, different characteristics, existing in other embodiments.

In practice, the materials employed, as well as the dimensions, may be any according to requirements and to the state of the art

## Claims

1. An apparatus for the movement and transport of agricultural products, of the type of grass, hay, forage, grain, maize, and the like, cut and distributed on the ground, which comprises a chassis (2) which can be coupled to a drive unit, for the movement thereof according to an advancement direction (A), said chassis (2) being associated with elements (3) for lifting and placing agricultural products on a useful surface of at least one conveyor belt (4), facing and proximate to said elements (3), for the movement and transport of the agricultural products according to a working direction (B) defined by said belt (4), **characterized in that** it comprises at least one elongated body (10), coupled directly or indirectly to said chassis (2) and rotating about a longitudinal axis (C) thereof, in at least one configuration for work said at least one body (10) being arranged at least proximate to said useful surface of said belt (4) and being directed, with successive portions of its rotating lateral surface (10a), toward said elements (3), in order to intercept and redirect any agricultural products lifted by the corresponding said elements (3) which face said body (10).

2. The apparatus according to claim 1, **characterized in that**, in said configuration for work, said at least one elongated body (10) is arranged at least proximate to an end part (4a) of said belt (4).

3. The apparatus according to claim 1 or 2, **characterized in that** it comprises a plurality of said elongated bodies (10), rotating about the respective longitudinal axis (C), in at least said configuration for work each one of said elongated bodies (10) being arranged at least proximate to said useful surface of said belt (4) and being directed, with successive portions of the respective rotating lateral surface (10a), toward said elements (3).

4. The apparatus according to one or more of the preceding claims, **characterized in that** at least in said configuration for work said at least one elongated body (10) can rotate about said longitudinal axis (C) in both directions of rotation, each direction of rotation being preferably associated with a respective direction of movement and transport of agricultural products, imparted by said belt (4) along said working direction (B).

5. The apparatus according to one or more of the preceding claims, **characterized in that** said at least one body (10) is coupled, directly or indirectly, to said chassis (2), by way of a supporting structure (12) which can move, for the transition of said body (10) from a configuration of rest to said configuration for work, and vice versa, in said configuration of rest said body (10) being spaced apart from said useful surface, for the free transit of any agricultural products lifted by the said elements (3) which face said body (10).

6. The apparatus according to claim 5, **characterized in that** said supporting structure (12) comprises a bracket (13) associated with said chassis (2) and rotatably coupled to a supporting arm (14) of said body (10), said arm (14) being made to rotate with respect to said bracket (13), about a rotation axis (D) which is preferably parallel to said longitudinal axis (C) of said body (10), by a respective actuator, in order to pass from said configuration of rest to said configuration for work, and vice versa.

7. The apparatus according to claim 6, **characterized in that** said actuator is constituted substantially by a hydraulic piston (15), which can slide in a respective cylinder (16) which is coupled to said bracket (13), said piston (15) being pivoted at the opposite end to a lever (17), which is rotatably coupled to said bracket (13) and, at the opposite end, to a conveniently contoured member (18) which is pivoted to said body (10).

8. The apparatus according to one or more of the preceding claims, **characterized in that** said lateral surface (10a) of said body (10) is constituted by a plurality of vanes (19) which are mutually connected along the sides and distributed in series, according to various inclinations, about said longitudinal axis (C).

9. The apparatus according to one or more of the preceding claims, **characterized in that**, at least in said configuration for work, said elongated body (10) can oscillate about a transverse axis (E), preferably parallel to said useful surface of said belt (4), in order to pass from a standard active position to at least one auxiliary position, and vice versa, the oscillation from said active position to said auxiliary position enabling any large piles of agricultural products to pass below said elongated body (10).

10. The apparatus according to claim 9, **characterized in that** said bracket (13) comprises at least one first supporting unit (20), which can be rigidly anchored to said chassis (2), and a profiled element (21), which is articulated to said first supporting unit (20) about said transverse axis (E) and supports said elongated body (10).

11. The apparatus according to claim 9 or 10, **characterized in that** said elongated body (10) is coupled, directly or indirectly, to said chassis (2) by way of a respective elastic element (24), for the development of an elastic reaction adapted to oppose the oscillation of said body from said active position to said auxiliary position and to automatically return said body (10) to said active position after any large piles of agricultural products have passed.

12. The apparatus according to one or more of the preceding claims, **characterized in that** said at least one belt (4) is wrapped in a ring about a pair of supporting shafts, which are mutually parallel and perpendicular to said working direction (B), at least one of said supporting shafts, which meshes with said at least one belt (4), being made to rotate about its own main axis by a respective main motor.

13. The apparatus according to one or more of the preceding claims, **characterized in that** said piston (15) is connected, directly or indirectly, to said main motor.

14. The apparatus according to claim 13, **characterized in that** said cylinder (16), which is of the hydraulic type, is arranged parallel to said main motor (29), which is chosen to be of the type of a hydraulic motor, the transition of said piston (15) from said configuration of rest to said configuration for work, and vice versa, corresponding to the reversal of the flow of the operating fluid of said hydraulic motor.
